# EUROPEAN PATENT APPLICATION

(11) **EP 4 738 203 A1**
(43) Date of publication of application: **06.05.2026**
(21) Application number: 24306858.2
(22) Date of filing: 04.11.2024
(51) Int. Cl.: G06N 3/084

(54) **METHOD FOR SECURING A NEURAL NETWORK AGAINST BACKDOOR ATTACKS AT THE TRAINING PHASE**

(71) Applicant: THALES DIS FRANCE SAS, 92190 Meudon (FR)
(72) Inventor: TEGLIA, Yannick, 13720 Belcodene (FR); LE ROUX, Quentin, 13600 La Ciotat (FR); BOURBAO, Eric, 83330 Le Beausset (FR)
(74) Representative: Bricks, Amélie

(57) **Abstract**

The present invention relates to a method for securing a neural network against backdoor attacks at the training phase, wherein the neural network comprises an input layer, hidden layers and an output layer and is trained by classifying datapoints into a set of output classes independently of its use after training, said method being performed by a computer system comprising, at the training phase:
- programming (S1) the computer system with the neural network to be trained,
- acquiring (S2) a training dataset comprising datapoints,
- training (S3) said neural network using said training dataset over several epochs,
- evaluating (S4), over at least one epoch, for each output class, an accuracy of classification into said class,
- performing (S5) a test over all output classes on said accuracies evaluated for each of said output classes, said test identifying as a deviating class at least one output class whose accuracy is deviating with regard to the accuracy of the other output classes over at least one epoch,
- when said test identifies at least one output class as a deviating class, performing (S6) a predetermined action for securing said neural network.

## Description

The present invention relates, generally, to the protection of neural networks against attacks, and, more particularly, to a method preventing a neural network from learning backdoors during training.

### BACKGROUND OF THE INVENTION

Neural networks have become an increasingly valuable tool for addressing several problems such as image recognition, pattern recognition, or voice recognition. Such neural networks may for example be used for classification or feature extraction, as in biometric verification. Accurate classification would correctly predict the class an input most likely belongs to. This is found, for instance, in authenticating persons correctly based on face pictures. Inaccurate classification can cause both false positives, such as interpreting an imposter as being the person being authenticated, and false negatives, such as falsely interpreting a person as being an imposter.

Feature extraction would correctly transform a raw input, such as a face image, into a number vector called an embedding that enables comparisons with other embeddings. For instance in a facial authentication system, face embeddings could be used to compare a candidate face with a previously stored face that has been enrolled in some application. A small distance metric or a high similarity score between the two embeddings would indicate that the two faces belong to the same person.

Neural networks may be subject to backdoor attacks. Such attacks consist in injecting into a model, during its training, a malicious trigger associated with a malicious, erroneous behavior of the neural network, such as classifying an input in a class to which it does not belong for real. Such an injection later enables an attacker to activate again this erroneous behavior at any time during inference by presenting the network with an input containing the backdoor trigger. Training-time backdoors are specially-crafted patterns injected in a victim neural network by injecting it into a training input such as an image, which is called data poisoning. Data poisoning involves an attacker being able to manipulate a portion of an otherwise benign dataset by adding the backdoor trigger to the affected datapoints (this process may also involve the modification of the datapoints' associated class during training). Then, during each datapoint forward and backward propagation, the training neural networks will learn to associate the expected malicious behavior with the trigger used to poison the dataset. Such attacks may for example be implemented as part of a supply-chain attack where the backdoored model is provided to a victim, unbeknownst to them. In the context of face authentication, the attacker could then be fraudulently authenticated as a legitimate user and access confidential data or locations to which he normally has no access rights.

Such attacks are all the more powerful that the attacker does not even need to conduct an interrogation of the model at test time, which is detectable, as in the case of adversarial attacks. The attacker only needs to query the model once, at inference, with the backdoor's designed trigger.

Existing solutions against backdoor attacks often aim at detecting at inference when a backdoor is triggered, for example by comparing the neural network output or inner state with values obtained when processing inputs which do not contain any backdoor. Such solutions do not enable to detect at training that a neural network is currently learning a malicious behavior due to backdoored training data. They rather only detect the backdoor after it has been learned by the neural network. In such a case, training would have to be performed again to purify the network from the malicious behavior embedded in it, which can be very costly in the case of large models.

Consequently, there is a need for a method enabling the protection of neural networks against such backdoor attacks as soon as in the model training phase, therefore preventing the protected neural network from learning a malicious behavior associated to a backdoor trigger despite a data poisoning of the model training data set.

### SUMMARY

For this purpose and according to a first aspect, this invention therefore relates to a method for securing a neural network against backdoor attacks at the training phase, wherein the neural network comprises an input layer, hidden layers and an output layer and is trained by classifying datapoints into a set of output classes independently of its use after training,
said method being performed by a computer system comprising, at the training phase:
- programming the computer system with the neural network to be trained,
- acquiring a training dataset comprising datapoints,
- training said neural network using said training dataset over several epochs,
- evaluating, over at least one epoch, for each output class, an accuracy of classification into said class,
- performing a test over all output classes on said accuracies evaluated for each of said output classes, said test identifying as a deviating class at least one output class whose accuracy is deviating with regard to the accuracy of the other output classes over at least one epoch,
- when said test identifies at least one output class as a deviating class, performing a predetermined action for securing said neural network.

By doing so, any output class whose accuracy is suspiciously different from that of the other output classes can be detected early in the training process and actions can be taken accordingly to protect the neural network against future backdoor attacks targeting such an output class.

In an embodiment, the step of performing said test may comprise comparing, for each output class, the average value, the slope or the acceleration of the accuracy evaluated for said output class over a predetermined number of classifications of datapoints into said output class, with the average values, the slopes or the accelerations of accuracies evaluated for all output classes, over said predetermined number of classifications of datapoints into said output classes.

In another embodiment, the step of performing said test may comprise comparing, for each output class, the average value, the slope or the acceleration of the accuracy evaluated for said output class over a predetermined number of batches or epochs with the average value, the slope or the acceleration of accuracies evaluated for all output classes over said batches or epochs.

By doing so, an output class can be identified as an outlier based on a too high accuracy or a too quick convergence of its accuracy, compared to the other output classes and such a diagnostic can be made on different timeframes up to several epochs.

Said test may be among a statistical or heuristic outlier detection test.

In an embodiment, the step of performing a predetermined action for securing said neural network may comprise removing from the training dataset datapoints classified by the neural network as belonging to at least one output class identified by said test as a deviating class.

By doing so, the training of the neural network over the next epochs will no longer be influenced by the probably malicious datapoints which contributed the most to the accuracy of the deviating output class over the past epochs of the training.

In another embodiment, the step of performing a predetermined action for securing said neural network may comprise removing from the output layer said at least one output class identified by said test as a deviating class.

Removing the whole deviating class from the model enables removing from the models the convergence paths which could have been used later by an attacker to make the network recognize a malicious input with the appropriate trigger as belonging to the deviating class.

The predetermined action may be performed immediately after said test has identified at least one output class as a deviating class. Alternatively, the predetermined action may be performed only after a new test performed over next batches or epochs has identified again as a deviating class said at least one output class already identified as a deviating class. It enables to wait for the suspicious behavior of an output class to be confirmed over a bigger number of datapoints before taking actions, such as removing this malicious behavior from the network.

According to a second aspect, this invention relates to a computer program product directly loadable into the memory of at least one computer, comprising software code instructions for performing the steps of the method according to the first aspect of the invention when said product is run on the computer.

According to a third aspect, the invention relates to a computer system for securing a neural network against backdoor attacks at the training phase, programmed with the neural network to be trained, wherein the neural network comprises an input layer, hidden layers and an output layer and is trained by classifying datapoints into a set of output classes independently of its use after training, and comprising :
- a processor,
- a communication interface connected to the processor, configured for acquiring a training dataset comprising datapoints and to provide the training dataset to the processor,
- at least one memory connected to the processor, configured for storing said neural network to be trained and including instructions executable by the processor, the instructions comprising:
   - training said neural network using said training dataset over several epochs,
   - evaluating, over at least one epoch, for each output class, an accuracy of classification into said class,
   - performing a test over all output classes on said accuracies evaluated for each of said output classes, said test identifying as a deviating class at least one output class whose accuracy is deviating with regard to the accuracy of the other output classes over at least one epoch,
   - when said test identifies at least one output class as a deviating class, performing a predetermined action for securing said neural network.

To the accomplishment of the foregoing and related ends, one or more embodiments comprise the features hereinafter fully described and particularly pointed out in the claims.

### BRIEF DESCRIPTION OF THE DRAWINGS

FIGURE 1 is a schematic illustration of a neural network to be secured according to the present invention;
FIGURE 2 is an example illustrating schematically that the classification accuracy of output classes recognizing poisoned datapoints increases and converges much more rapidly than the classification accuracy of output classes recognizing legitimate datapoints.
FIGURE 3 is a schematic illustration of the computer system performing said method for securing a neural network against backdoor attacks according to an embodiment of the present invention;
FIGURE 4 is a schematic illustration of a method for securing a neural network against backdoor attacks at the training phase according to an embodiment of the present invention;
FIGURE 5 is a schematic illustration showing the evolution of the accuracy of both a backdoored output class and non-backdoored output classes over the first 1200 batches of training, in the first epoch.

### DETAILED DESCRIPTION OF THE INVENTION

The herein described technology provides a method for securing a neural network against backdoor attacks at its training phase.

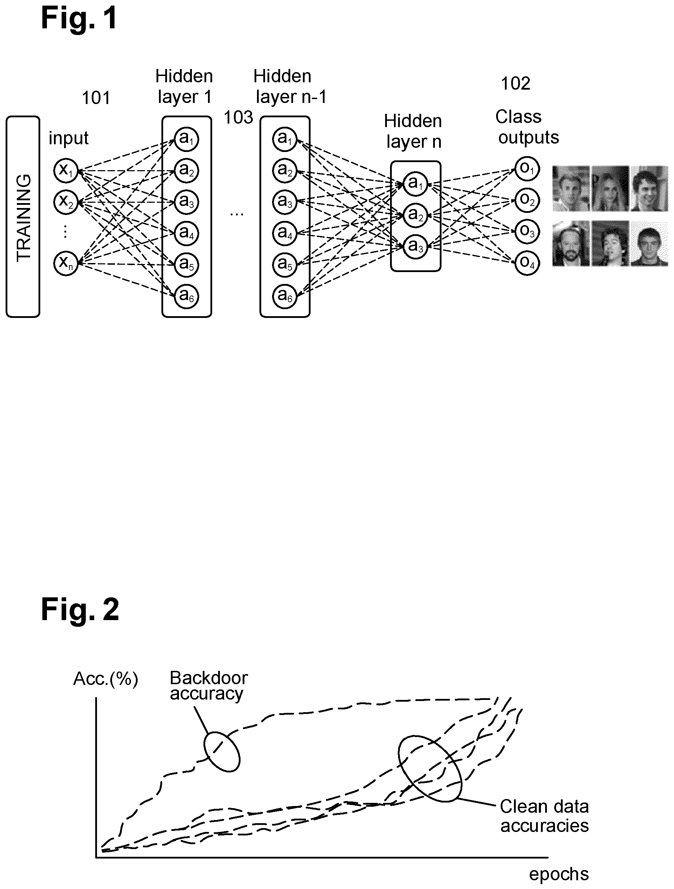

Such a Neural Network may for example be a Convolutional Neural Network (CNN) or Multi-Layer Perceptron (MLP). As shown on **Figure 1****,** it includes at least an input layer 101 to which input samples can be provided. It also includes an output layer 102 which provides an output when an input sample is provided to the input layer of the model. In between, such a model may include a plurality of hidden layers of neurons 103 with their parameters. Such a neural network is also defined by structural elements comprising functions and structural parameters which are not subject to training. These structural elements define how the model is built and what functions are performed in the layers of the model.

Such a Neural Network may be intended for several uses when used at a future inference stage. For example, it may be intended to be a classifier, classifying input samples provided to its input layer into a plurality of output classes. Alternatively, it may be intended to be a feature extractor, in which case its output layer at inference will be an embedding output layer (a hidden layer of the model at the training stage) which provides, as a response to receiving an input sample on its input layer, a number-valued vector output called an embedding.

Whatever its intended future use, the neural network is trained at its training phase by classifying, into a plurality of output classes, datapoints provided to its input layer. A training dataset may comprise several batches of datapoints. Each time the neural network has been trained with all the datapoints of the training dataset, one says that the neural network has completed an epoch.

In order to detect a backdoor attack trying to make the neural network learn to associate a given output class to poisoned datapoints of the training dataset containing a specific trigger crafted by an attacker, the main idea of the invention is to take advantage of the fact that, as shown on **Figure 2****,** the classification accuracy of poisoned datapoints containing such a trigger increases and converges much more rapidly than the classification accuracy of legitimate datapoints. As a result, after enough batches or a few epochs, any output class classifying datapoints with a confidence score much higher than that of other output classes may be considered as likely to be learning from poisoned datapoints.

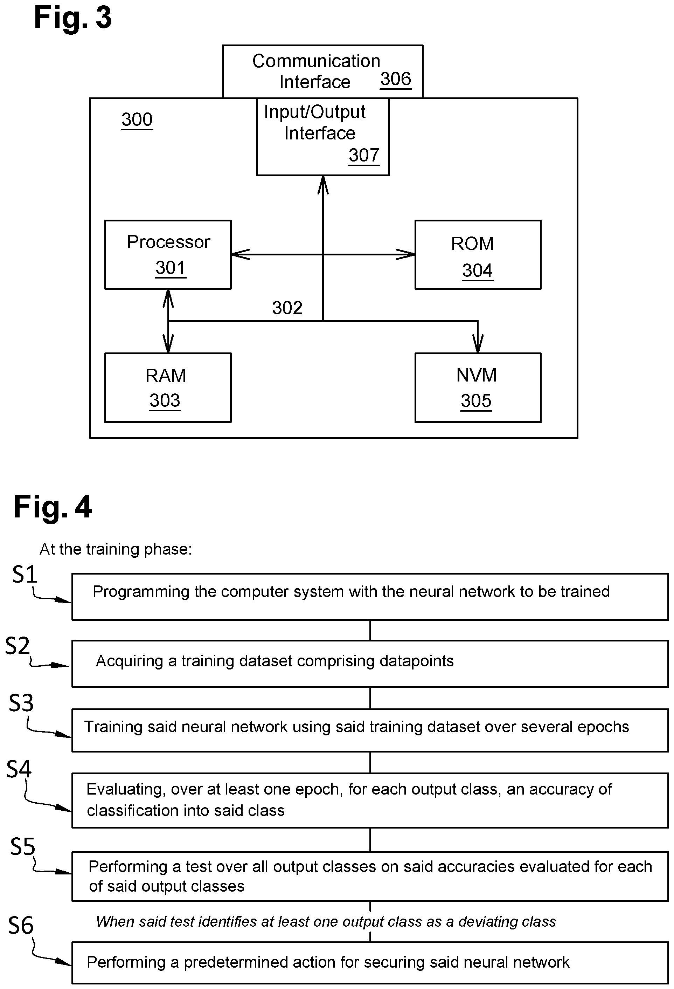

As shown on **Figure 3****,** the computer system 300 may include a processor 301, which may be a microprocessor, a graphics processing unit, or any processing unit suitable for executing the steps of the method described below, connected via a bus 302 to a random-access memory (RAM) 303, a read-only memory (ROM) 304, and/or a non-volatile memory (NVM) 305. The non-volatile memory may store the trained model, including its parameters and hyper-parameters such as weights associated with the neurons that make up a neural network and that are adjusted during training of the neural network. It may also store the training dataset comprising the datapoints used for training the model.

The computer system 300 may further include a communication interface 306 by which the computer system 300 may be connected to various forms of wireless networks, e.g., wide-area networks, WiFi networks, or mobile telephony networks. Alternatively, the computer system 300 may connect to networks via wired network connections such as Ethernet. The computer system may also include input/output means 307 providing interfaces to the user of the computer system, such as one or more screens, loudspeakers, a mouse, tactile surfaces, a keyboard etc...

**Figure 4** is a flow-diagram illustrating steps of a method for securing the neural network against backdoor attacks at the training phase.

During a first step S1, the computer system described above is programmed with the neural network to be trained. During this step, the trained model is set in the computer system, particularly in its memory 305, such that the computer system can:
- perform a forward propagation through the model of datapoints provided to its input layer,
- get from the output layer, for each datapoint provided to the input layer, an output vector comprising an activation strength for each of the output classes,
- perform a backward propagation through the neural network from the output of the output layer, for updating the model parameters.

In a second step S2, the computer system acquires a training dataset, comprising a plurality of datapoints to be used as inputs to the model in order to train it. Such a training dataset may for example comprise thousands or millions of datapoints, some of which may be poisoned by a malicious trigger. Such a test dataset may be imported in the computer system through the communication interface 306.

In a third step S3, the computer system trains the neural network using said training dataset. This training is repeated over several epochs in order to make the weights of the neurons converge as the neural network learns how to associate the training datapoints to their correct output classes.

In a fourth step S4, the computer system evaluates, over at least one epoch, for each output class of the neural network, the accuracy of classification into said class.

At any time during the training, the classification accuracy of the datapoints into any output class, also called in the rest of the description the accuracy evaluated for the output class, or simply the accuracy of the output class, can be defined as the average of the activation strength associated to this output class in the outputs of the output layer. The accuracy may be computed from normalized values, such as the confidence scores at the output of a softmax function, or from raw values such as logits.
Such an average is preferably computed only over the output vectors associated to datapoints classified by the neural network as belonging to this output class, i.e. the output vectors whose biggest activation score is the one associated to this output class. Such an average may be computed over a predetermined number N of such datapoints classified by the neural network as belonging to this output class. In an embodiment, an average accuracy of an output class over an epoch may be computed by averaging the confidence score obtained during this epoch for all the datapoints classified by the neural network as belonging to this output class.

In an embodiment, an accuracy may be computed independently for each datapoint classified by the neural network as belonging to this output class, by averaging over several epochs the accuracy of classification of this datapoint only into this output class. By doing so, it is possible to identify, among the datapoints classified by the neural network as belonging to a deviating class, which datapoints probably comprise a backdoor trigger.

In a fifth step S5, the computer system performs a test, over all the output classes, on the accuracies evaluated for these output classes. This test is designed to identify as a deviating class any output class whose accuracy is deviating with regard to the accuracy of the other output classes over at least one epoch.

Such a test may for example consist in comparing, for each output class, the average value of the accuracy evaluated for this output class with the average values of the accuracies evaluated for all the output classes. For each output class, its average accuracy may be computed over a predetermined number of classifications of datapoints into this output class, i.e., as described above, over the output vectors associated to datapoints classified by the neural network as belonging to this output class. Such a test enables to detect when at a certain point during the training an output class has already reached a much higher classification accuracy than the other output classes, which is suspicious.

Instead of comparing the average accuracies of the output classes, the test performed at the fifth step may compare the slope of the accuracies or their accelerations. Such a test would enable to detect an output class exhibiting a convergence speed of its accuracy much higher than that of the other output classes.

When the predetermined number of classifications of datapoints into an output class over which the accuracies are determined is low, the compared average accuracy or accuracy slope or acceleration are computed over a short period of time in the course of training and are rather instantaneous values. Alternatively, the test may compare accuracies, accuracy slopes or accelerations evaluated over a much larger part of the training, for example over a predetermined number of batches, over a full epoch or even predetermined number of epochs. It enables to identify trends over a large period of training rather than instantaneous values which may be false positive.

In order to compare the accuracy of a given output class, or its slope or acceleration, to the accuracies of all the output classes (or their slopes or accelerations), different kinds of outlier detection tests may be performed.

The test performed at the fifth step may for example be a statistical test. The computer system may for example determine the distribution of the accuracies of all the output classes, such as a gaussian distribution with a given mean value and standard deviation and the test may test if the probability that an output class has an accuracy equal to or above the accuracy of the test class, the p-value, is below a predetermined threshold. For example, the test may identify as a deviating class any output class whose accuracy is bigger than accuracy being the upper limit of the 90, 95% or 99% confidence interval associated to the determined distribution.

Alternatively, the test performed at the fifth step may be a heuristic test by which the difference between the accuracy of the output class or its slope or acceleration, and the accuracies of the output classes is compared to a threshold. For example, the test may identify as a deviating class any output class whose accuracy is such that the difference between it and the mean of the accuracies of all the output classes is bigger than a threshold such as 40%, 50% or 60%.

The fourth step S4 and the fifth step S5 can be repeatedly performed during the training of the neural network, therefore during the third step S3, in order to detect the effect of poisoned datapoints on the training of the neural network. By doing so, such an effect is detected early during the training phase, without waiting for the training to have been completed.

In a sixth step S6, when the test performed at the fifth step S5 identifies at least one output class as a deviating class, the computer system performs a predetermined action for securing the neural network.

As an example, the computer system may trigger an alarm.

It may also remove from the training dataset datapoints classified by the neural network as belonging to one or more output classes identified by said test of the fifth step as a deviating class. Since these datapoints probably contain a backdoor that makes the network classify them into the deviating class, removing them from the training dataset enables to sanitize the dataset.

In addition, the computer system may also remove from the output layer the one or more output classes identified by the test of the fifth step as a deviating class.

In an embodiment, the predetermined action described above is performed immediately after a test has identified at least one output class as a deviating class. Alternatively, a first test may be performed by comparing accuracies evaluated over a short period of training, for example over a limited number of classifications of datapoints into the output classes; and when the first test identifies a deviating class among the output class, a second test is performed by comparing accuracies evaluated over a longer period of training, for example over several batches of datapoints or epochs. In such a case, the predetermined action is performed only after the second test has identified again as a deviating class over a longer timeframe (over next batches or epochs) at least one output class already identified as deviating class on a shorter timeframe by the first test.

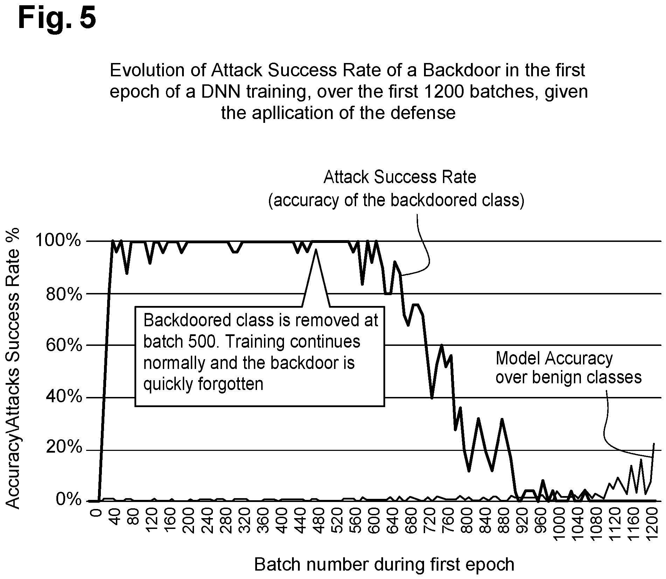

**Figure 5** shows the evolution of the accuracy of both a backdoored output class and non-backdoored output classes over the first 1200 batches of training, in the first epoch. As described above, the accuracy of the backdoored output class is much higher than the accuracy of the other output classes after only a few dozen batches. This figure also shows that, after the method according to the invention is applied and the output class which display the most outlying metrics compared to the others (aka the backdoored class) is detected and removed from the model training at batch 500, its accuracy quickly decreases over the next batches until it becomes no different from the accuracies of the other output classes. It clearly indicates that removing the outlier class from the network suppressed the malicious behavior triggered by backdoored datapoints.

According to a second aspect, the invention relates to a computer system 300 described here before and programmed with the neural network to be trained and comprising:
- a processor 301,
- a communication interface 306 connected to the processor, configured for acquiring a training dataset comprising datapoints and to provide the training dataset to the processor,
- at least one memory 305 connected to the processor, configured for storing said neural network to be trained and including instructions executable by the processor, the instructions comprising:
   - training said neural network using said training dataset over several epochs,
   - evaluating, over at least one epoch, for each output class, an accuracy of classification into said class,
   - performing a test over all output classes on accuracies evaluated for said output classes, said test identifying as a deviating class at least one output class whose accuracy is deviating with regard to the accuracy of the other output classes over at least one epoch,
   - when said test identifies at least one output class as a deviating class, performing a predetermined action for securing said neural network.

According to a third aspect, the invention relates to a computer program product directly loadable into the memory of at least one computer, comprising software code instructions for performing, when said product is run on the computer, the steps of the methods described here before.

In addition to these features, the computer system and computer program product according to the second and third aspect of the invention may be configured for performing or may comprise any other features described here before.

Such a method, computer system and computer program product enable to detect an output class deviating, throughout the learning phase, from the other output classes. Then it enables to take actions for preventing the neural network being trained from learning a malicious relationship between this deviating output class and one or more datapoints comprising a trigger. As a result, a clean neural network can be produced by the training phase, despite the presence of such poisoned datapoints in the training data set.

## Claims

1. A method for securing a neural network against backdoor attacks at the training phase, wherein the neural network comprises an input layer, hidden layers and an output layer and is trained by classifying datapoints into a set of output classes independently of its use after training,
said method being performed by a computer system (300) comprising, at the training phase:
- programming (S1) the computer system with the neural network to be trained;
- acquiring (S2) a training dataset comprising datapoints;
- training (S3) said neural network using said training dataset over several epochs;
- evaluating (S4), over at least one epoch, for each output class, an accuracy of classification into said class;
- performing (S5) a test over all output classes on said accuracies evaluated for each of said output classes, said test identifying as a deviating class at least one output class whose accuracy is deviating with regard to the accuracy of the other output classes over at least one epoch;
- when said test identifies at least one output class as a deviating class, performing (S6) a predetermined action for securing said neural network.

2. The method of claim 1, wherein performing said test (S5) comprises comparing, for each output class, the average value, the slope or the acceleration of the accuracy evaluated for said output class over a predetermined number of classifications of datapoints into said output class, with the average values, the slopes or the accelerations of accuracies evaluated for all output classes, over said predetermined number of classifications of datapoints into said output classes.

3. The method of claim 1, wherein performing said test (S5) comprises comparing, for each output class, the average value, the slope or the acceleration of the accuracy evaluated for said output class over a predetermined number of batches or epochs with the average value, the slope or the acceleration of accuracies evaluated for all output classes over said batches or epochs.

4. The method of any of claim 1 to 3, wherein said test is among a statistical or heuristic outlier detection test.

5. The method of any of claim 1 to 4, wherein performing a predetermined action for securing said neural network (S6) comprises removing from the training dataset datapoints classified by the neural network as belonging to at least one output class identified by said test as a deviating class.

6. The method of any of claims 1 to 4, wherein performing a predetermined action for securing said neural network (S6) comprises removing from the output layer said at least one output class identified by said test as a deviating class.

7. The method of any of claims 1 to 6, wherein the predetermined action is performed immediately after said test has identified at least one output class as a deviating class.

8. The method of any of claims 1 to 6, wherein the predetermined action is performed only after a new test performed over next batches or epochs has identified again as a deviating class said at least one output class already identified as a deviating class.

9. A computer program product directly loadable into the memory of at least one computer, comprising software code instructions for performing the steps of any one of claims 1 to 8 when said product is run on the computer.

10. A computer system (300), for securing a neural network against backdoor attacks at the training phase, programmed with the neural network to be trained, wherein the neural network comprises an input layer, hidden layers and an output layer and is trained by classifying datapoints into a set of output classes independently of its use after training, and comprising:
- a processor (301);
- a communication interface (306) connected to the processor, configured for acquiring a training dataset comprising datapoints and to provide the training dataset to the processor;
- at least one memory (305) connected to the processor, configured for storing said neural network to be trained and including instructions executable by the processor, the instructions comprising:
• training said neural network using said training dataset over several epochs;
• evaluating, over at least one epoch, for each output class, an accuracy of classification into said class;
• performing a test over all output classes on said accuracies evaluated for each of said output classes, said test identifying as a deviating class at least one output class whose accuracy is deviating with regard to the accuracy of the other output classes over at least one epoch;
• when said test identifies at least one output class as a deviating class, performing a predetermined action for securing said neural network.
